# EUROPÄISCHE PATENTSCHRIFT

(11) **EP 0 960 921 B1**
(45) Veröffentlichungstag und Bekanntmachung des Hinweises auf die Patenterteilung: **14.08.2002**
(21) Anmeldenummer: 99109981.3
(22) Anmeldetag: 21.05.1999
(51) Int. Cl.: C09D 183/08, C08G 77/26, C08G 77/24, C09K 3/18

(54) **Oligomerisiertes Organopolysiloxan-Cokondensat, dessen Herstellung und dessen Verwendung zur Behandlung von Oberflächen**
Oligomeric organopolysiloxan cocondensate, his preparation and use for coating surfaces
Cocondensat oligomérique d' organopolysiloxane, sa préparation et son emploi comme agent de revêtement pour sufaces

(30) Priorität: 26.05.1998 DE 19823390
(43) Veröffentlichungstag der Anmeldung: 01.12.1999
(73) Patentinhaber: Degussa AG, 40474 Düsseldorf (DE)
(72) Erfinder: Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Just, Eckhard, 79618 Rheinfelden (DE); Kaussen, Manfred, Dr., 52080 Aachen (DE); Laven, Ralf, Dr., 79739 Schwörstadt (DE); Lohmann, Helmut, Dr., 47802 Krefeld (DE); Mack, Helmut, Dr., 79618 Rheinfelden (DE); Monkiewicz, Jaroslaw, Dr., 79618 Rheinfelden (DE); Ramlow, Stephan, 47807 Krefeld (DE); Standke, Burkhard, Dr., 79540 Lörrach (DE)

(56) Entgegenhaltungen:
- EP-A- 0 846 716
- EP-A- 0 846 717

## Beschreibung

Die Erfindung betrifft ein gegebenenfalls Fluor-funktionelles, in Wasser und/oder Alkohol lösliches oligomerisiertes Organopolysiloxan-Cokondensat, ein Verfahren zu dessen Herstellung sowie dessen Verwendung zur Behandlung von Oberflächen.

Es ist bekannt, daß man hydrophile Oberflächen, beispielsweise keramische, metallische oder Glasoberflächen, durch Behandlung mit Alkylalkoxysilanen hydrophobieren kann. Fluorhaltige Organosilane der allgemeinen Formel R'-Si(R")₃, mit R' als fluoriertem organischen Rest und R" als Chlor- oder Alkoxyrest, finden vielfältige Anwendungen zum Aufbringen hydrophob sowie oleophob wirkender Schichten auf Oberflächen. Die Beschichtungen können auch zur schmutzabweisenden Ausrüstung von Flachglas verwendet werden. Die beschrieben Verfahren basieren auf Sol-Gel-Prozessen, wobei zusammen mit dem Fluoralkylsilan feinste anorganische Partikel eingesetzt werden. Die Applikation solcher Systeme ist technisch aufwendig und erfordert meistens komplexe organische Lösemittelgemische und Zusatzstoffe (siehe z. B. JA 07 112 126, JA 08 157 643, JA 08 026 774, JA 08 040 748, JA 07 232 399, JA 07 112 126, EP 0 658 525, JA 08 157 643 und EP 0 629 673).

Weitere komplizierte Applikationsmethoden unter Erzeugung von Zwischenschichten auf dem Substrat werden in JA 07 238 229 und JA 07 138 047 beschrieben.

Erhebliche Mengen organischer Lösemittel müssen bei der Erzeugung von Öl- und Wasser-abweisenden Beschichtungen gemäß US 5 424 130 (52 Gew.-% Ethanol), JA 07 289 985 (94 Gew.-% Isopropanol) und JA 07 257 943 eingesetzt werden. Weiterhin sind Verfahren bekannt geworden, die ökologisch unerwünschte Lösemittel in erheblichen Mengen verwenden, z. B. chlorierte Kohlenwasserstoffe oder Fluorkohlenwasserstoffe (EP-A2 0 491 251 und EP-A2 0 493 747).

Einige der erwähnten Verfahren besitzen den Nachteil, daß nach der Applikation des Beschichtungsmittels relativ hohe Temperaturen angewandt werden müssen, um den erwünschten Oberflächeneffekt zu erzielen. Auch die Verfahren nach den deutschen Patentanmeldungen 196 49 953, 196 49 954 und 196 49 955 erfordern eine Trocknung bei Temperaturen >100°C. Verschiedene Substrate, wie thermoempfindliche Kunststoffoberflächen, Papier, Pelze, Stoffe oder Leder, werden bei derartig hohen Temperaturen geschädigt. Ein weiterer Nachteil der bekannten und der älteren Systeme besteht darin, daß nach längerer Feuchtigkeitseinwirkung der gewünschte Oberflächeneffekt stark nachläßt. Das äußert sich z. B. darin, daß Glasplatten, welche mit den oben beschriebenen fluorhaltigen Systemen behandelt wurden und dann einen stark ausgeprägten hydro- und oleophoben Effekt aufwiesen, nach mehrstündiger Wasserbehandlung (z. B. bei der Siedetemperatur des Wassers) diesen Effekt nur noch schwach ausgeprägt oder überhaupt nicht mehr zeigten.

Es bestand daher die Aufgabe, Silan-basierende Systeme zu entwickeln, welche in einem wäßrigen oder wäßrig-alkoholischen Medium löslich sind und mit denen man in einem einfach auszuführenden Imprägnierverfahren bei Temperaturen unterhalb von 100°C, vorteilhaft bei Raumtemperatur, auf pulverigen, porösen oder glatten flächigen oder auf faserigen Substraten eine hydrophobe und gegebenenfalls zusätzlich oleophobe Beschichtung erzeugen kann, deren Effekt auch nach längerer Feuchtigkeitseinwirkung nicht signifikant nachläßt.

Der deutschen Patentanmeldung 196 49 955 ist eine Fluoralkyl-funktionelle Organopolysiloxan-haltige Zusammensetzung auf Wasser/Alkohol-Basis zu entnehmen, die erhältlich ist durch
(a) Mischen
   - wasserlöslicher Organosilane der allgemeinen Formel I

      H₂N(CH₂)_{f}(NH)_{g}(CH₂)ₕ-Si(CH₃)_{z}(OR)_{3-z} (I),

      worin 0 ≤ f ≤ 6, g = 0 falls f = 0 und g = 1 falls f > 1, 0 ≤ h ≤ 6, 0 ≤ z ≤ 1 und R eine lineare, verzweigte oder cyclische Alkyl-Gruppe mit 1 bis 8 C-Atomen oder Aryl-Gruppe sind, mit
   - Fluoralkyl-funktionellen Organosilanen der allgemeinen Formel II

      R¹-Yₘ-(CH₂)₂Si(R²)_{y}(OR)_{3-y} (II)

      worin R¹ eine mono-, oligo- oder perfluorierte Alkyl-Gruppe mit 1 bis 9 C-Atomen oder eine mono-, oligo- oder perfluorierte Aryl-Gruppe, Y eine CH2-, O- oder S-Gruppe, R² eine lineare, verzweigte oder cyclische Alkyl-Gruppe mit 1 bis 8 C-Atomen oder eine Aryl-Gruppe und R eine lineare, verzweigte oder cyclische Alkyl-Gruppe mit 1 bis 8 C-Atomen oder eine Aryl-Gruppe darstellen, 0 ≤ y ≤ 1 und m = 0 oder 1 sind, und gegebenenfalls
   - Organosilanen der allgemeinen Formel III

      R³-Si(CH₃)(OR)₂ (III)

      und/oder
   - Organosilanen der allgemeinen Formel IV

      R³-Si(OR)₃ (IV),
   worin R³ hier und in der vorangegangenen Formel eine lineare, verzweigte oder cyclische Alkyl-Gruppe mit 1 bis 8 C-Atomen bedeutet, R³ hier und in der vorangegangenen Formel jeweils gleich oder verschieden ist, R hier und in der vorangegangenen Formel eine lineare, verzweigte oder cyclische Alkyl-Gruppe mit 1 bis 8 C-Atomen oder eine Aryl-Gruppe bedeutet und R jeweils gleich oder verschieden ist,
   in dem molaren Verhältnis M = [a/(b+c+d)] > 0,1 mit a > 0, b > 0, c > 0, d > 0,
   wobei a die Summe der Molzahlen der Organosilane gemäß Formel I, b die Summe der Molzahlen der Organosilane gemäß Formel II sowie gegebenenfalls c die Summe der Molzahlen der Organosilane gemäß Formel III sowie d gegebenenfalls die Summe der Molzahlen der Organosilane gemäß Formel IV sind,
(b) Versetzen des Gemisches mit Wasser oder einem Wasser/Säure-Gemisch und/oder einem Wasser/Säure/Alkohol-Gemisch und
(c) Einstellen des pH-Wertes der Reaktionsmischung auf einen Wert zwischen 1 und 8.

Es wurde nun überraschend gefunden, daß die obige Aufgabe vorteilhaft gelöst wird, wenn man die Zusammensetzung der deutschen Patentanmeldung 196 49 955 gegebenenfalls hinsichtlich der Kombination der Ausgangsstoffe der allgemeinen Formeln I bis IV und auf jeden Fall dadurch modifiziert, daß man einen zusätzlichen Verfahrensschritt anfügt.

Einer der Gegenstände der vorliegenden Erfindung ist dementsprechend ein gegebenenfalls Fluoralkyl-funktionelles, in Wasser und/oder Alkohol gelöstes oligomerisiertes Organopolysiloxan-Cokondensat, erhältlich durch
(a) Mischen
   - mindestens eines wasserlöslichen Amino-funktionellen Organosilans der allgemeinen Formel I

      H₂N(CH₂)_{f}(NH)_{g}(CH₂)ₕ-Si(CH₃)_{z}(OR)_{3-z} (I),

      worin f gleich 0 oder eine ganze Zahl von 1 bis 6 ist, g gleich 0 falls f gleich 0 und g gleich 1 falls f ungleich 0 ist; h eine ganze Zahl von 1 bis 6 bedeutet, z für 0, 1 oder 2 steht und R eine lineare, verzweigte oder cyclische Alkyl-Gruppe mit 1 bis 8 C-Atomen oder eine Aryl-Gruppe bezeichnet, mit
   - mindestens einem Fluor-funktionellen Organosilan der allgemeinen Formel II

      R¹-Yₘ-(CH₂)₂Si(R²)_{y}(OR)_{3-y} (II),

      worin R¹ eine mono-, oligo- oder perfluorierte Alkyl-Gruppe mit 1 bis 9 C-Atomen oder eine mono-, oligo- oder perfluorierte Aryl-Gruppe bedeutet, Y eine CH₂-, O- oder S-Gruppe bezeichnet, R² für eine lineare, verzweigte oder cyclische Alkyl-Gruppe mit 1 bis 8 C-Atomen oder eine Aryl-Gruppe steht, R eine lineare, verzweigte oder cyclische Alkyl-Gruppe mit 1 bis 8 C-Atomen oder eine Aryl-Gruppe darstellt, y für 0 oder 1 und m für 0 oder 1 stehen, und/oder mit
   - mindestens einem Organosilan der allgemeinen Formel III

      R³-Si(CH₃)(OR)₂ (III),

      und/oder mit
   - mindestens einem Organosilan der allgemeinen Formel IV

      R³-Si(OR)₃ (IV),
   wobei R³ in den Formeln III und IV jeweils unabhängig eine lineare, verzweigte oder cyclische Alkyl-Gruppe mit 1 bis 8 C-Atomen bedeutet, R jeweils unabhängig eine lineare, verzweigte oder cyclische Alkyl-Gruppe mit 1 bis 8 C-Atomen oder eine Aryl-Gruppe bezeichnet,
   in einem molaren Verhältnis M = [a/(b+c+d)] ≥ 0,1,
   wobei a die Summe der Molzahlen der Organosilane gemäß Formel I, gegebenenfalls b die Summe der Molzahlen der Organosilane gemäß Formel II, gegebenenfalls c die Summe der Molzahlen der Organosilane gemäß Formel III sowie d gegebenenfalls die Summe der Molzahlen der Organosilane gemäß Formel IV sind;
(b) Versetzen des Gemisches mit Wasser und mit einer Säure sowie gegebenenfalls einem Alkohol; und
(c) Oligomerisierung des so erhaltenen Cokondensats unter Vergrößerung der Teilchengröße,
wobei die mittlere Teilchengröße d50 der oligomerisierten Polyorganosiloxan-Cokondensat-Teilchen 0,03 bis 1 µm beträgt.

Die erfindungsgemäßen oligomerisierten Polysiloxan-Cokondensate liegen als klare, wäßrige oder wäßrig-alkoholische Systeme vor, die die Polysiloxan-Cokondensate einschließlich der Säurereste enthalten. Anders als bei der Zusammensetzung nach der deutschen Patentanmeldung 196 49 955 muß das durch Hydrolyse der Halogen und/oder Alkoxygruppen und anschließende Kondensation der Silanolgruppen entstehende Cokondensat nicht fluorhaltig sein. Die erfindungsgemäßen Cokondensate basieren stets auf einem wasserlöslichen Amino-funktionellen Organosilan I, hinsichtlich der weiteren Komponenten herrscht jedoch Wahlfreiheit. Demzufolge sind die Kombinationen I+II, I+III, I+IV, I+II+III, I+II+IV sowie I+II+III+IV möglich. Wenn das Cokondensat die Fluor-funktionelle Komponente II enthält, ist die Beschichtung daraus hydrophob und zugleich oleophob. Fehlt die Komponente II, so ist die Beschichtung lediglich hydrophob.

Ein anderer Gegenstand der Erfindung ist ein Verfahren zur Herstellung des gegebenenfalls Fluoralkyl-funktionellen, in Wasser und/oder Alkohol löslichen oligomerisierten Organopolysiloxan-Cokondensats, bei dem man
(a) die erwähnten Komponenten I mit der oder den Komponenten II und/oder III und/oder IV in dem erwähnten molaren Verhältnis M mischt;
(b) das Gemisch mit Wasser und mit einer Säure sowie gegebenenfalls einem Alkohol versetzt; und
(c) das so erhaltenen Cokondensat unter Vergrößerung der Teilchengröße oligomerisiert.

Einer weiterer Gegenstand der vorliegenden Erfindung ist schließlich die Verwendung der gegebenenfalls Fluoralkyl-funktionellen, in Wasser und/oder Alkohol löslichen Organopolysiloxan-Cokondensate (i) zur hydrophoben und gegebenenfalls zusätzlich oleophoben Beschichtung von Oberflächen, (ii) als Trennmittel oder (iii) zur schmutzabweisenden Ausrüstung von Oberflächen.

Geeignete Amino-funktionelle Organosilane I sind z.B. beta-Aminoethyltrimethoxysilan, beta-Aminoethyl-triphenoxysilan, beta-Aminoethyl-methyl-dimethoxysilan, beta-Aminoethyl-phenyl-dimethoxysilan, beta-Aminoethyltrimethoxysilan, beta-Aminoethyl-methyl-dimethoxysilan, beta-Aminoethyltriethoxysilan, (beta-Aminoethylamino)-ethyltriethoxysilan, (beta-Aminoethylamino)-n-propyltriethoxysilan, (beta-Aminoethylamino)-n-propyl-methyl-dimethoxysilan, omega-Amino-n-hexyl-triethoxysilan, omega-Amino-n-hexyltrimethoxysilan, omega-Amino-n-hexyl-methyl-dimethoxysilan sowie insbesondere gamma-Amino-n-propyl-trimethoxysilan, gamma-Amino-n-propyl-methyldimethoxysilan, gamma-Amino-n-propyl-triethoxysilan und gamma-Amino-npropyl-methyl-diethoxysilan.

Zu den geeigneten Fluor-funktionellen Organosilanen II zählen u. a. 3,3,3-Trifluorpropyl-trimethoxysilan, 3,3,3-Trifluorpropyl-methyl-dimethoxysilan, 3,3,3-Trifluorpropyl-methyl-dimethoxysilan, 3,3,3-Trifluorpropyl-cyclohexyldimethoxysilan, 3,3,3-Trifluorpropyl-phenyl-diethoxysilan, 3,3,3-Trifluorpropyltriethoxysilan, 3,3,3,2,2-Pentafluorpropyl-methyl-dimethoxysilan, 3,3,3-Trifluorpropyloxyethyl-trimethoxysilan, 3,3,3-Trifluorpropylmerkaptoethyl-trimethoxysilan, 3,3,3-Trifluorpropyloxyethyl-methyl-dimethoxysilan sowie insbesondere Tridecafluor-1,1,2,2-tetrahydrooctyl-trimethoxysilan und Tridecafluor-1,1,2,2-tetrahydrooctyl-triethoxysilan.

Von den geeigneten Organosilanen III seien bespielhaft erwähnt: n-Octylmethyl-dimethoxysilan, n-Hexyl-methyl-dimethoxysilan, n-Hexyl-methyl-diethoxysilan, n-Hexyl-methyl-diphenoxysilan sowie insbesondere Dimethyldimethoxysilan, Dimethyl-diethoxysilan, Propyl-methyl-dimethoxysilan und Propyl-methyl-diethoxysilan.

Beispiele für geeignete Organosilane IV sind u.a. n-Octyl-trimethoxysilan, n-Hexyl-triethoxysilan, Cyclohexyl-triethoxysilan, n-Propyl-tri-n-butoxysilan, n-Propyl-triphenoxysilan sowie insbesondere n-Propyl-trimethoxysilan, n-Propyl-triethoxysilan, Isobutyl-trimethoxysilan und Isobutyl-triethoxysilan.

Wie zuvor erwähnt, beträgt das molare Verhältnis M ≥ 0,1. Das Molverhältnis beträgt vorteilhaft ≥ 0,5 und insbesondere ≥ 1.

Erfindungsgemäß wird das Gemisch der Komponente 1 mit den Komponenten II, III und/oder IV mit Wasser und, zweckmäßig danach, mit einer Säure sowie gegebenenfalls einem Alkohol versetzt. Das Wasser bewirkt die Hydrolyse der in den Komponenten enthaltenen hydrolysierbaren Gruppen zu Silanolen, die unter Ausbildung von Siloxanbrücken cokondensieren. Vorteilhaft setzt man zunächst nur Wasser zu, zweckmäßig in einer Menge, die der 0,1- bis 20fachen, vorteilhaft der 0,2- bis 2fachen molaren Menge der in dem Gemisch der verschiedenen Komponenten enthaltenen hydrolysierbaren Gruppen entspricht. Deren Hydrolyse findet in der Regel bei Temperaturen zwischen 0°C und 100°C, vorteilhaft zwischen 10 und 80 °C und insbesondere zwischen 20 und 60 °C statt. Je nach der Größe des Ansatzes stellt sich eine leicht erhöhte Temperatur innerhalb dieser Temperaturbereiche von selbst ein oder muß Reaktionswärme durch Kühlung abgeführt werden. Zweckmäßig wird die Durchmischung des Hydrolysegemisches durch geeignete Maßnahmen, wie Verwendung eines Rührers, gefördert.

Nach der Hydrolyse mit anschließender Cokondensation, die je nach den Reaktanten (Komponenten) und der Temperatur etwa 20 Minuten bis 10 Stunden in Anspruch nimmt, setzt man dem Gemisch, zweckmäßig wiederum unter Rühren, eine Säure sowie gegebenenfalls einen Alkohol und weiteres Wasser zu. Die Säure kann als solche oder in Form einer wäßrigen oder wäßrig-alkoholischen Lösung angewandt werden. Geeignete Säuren sind u. a. Salzsäure, Salpetersäure, Schwefelsäure, Ameisensäure und Essigsäure. Geeignete Alkohole sind z. B. Methanol, Ethanol, Propanol, Isopropanol, n-Butanol, i-Butanol, t-Butanol oder 2-Methoxyethanol als Alkohol. Natürlich kann man die Komponenten Säure, Wasser und Alkohol auch getrennt zusetzen. Vor der Zugabe der Säure kann man den durch Hydrolyse entstandenen Alkohol ganz oder teilweise abtrennen, zweckmäßig durch Destillation unter Atmosphärendruck oder leicht vermindertem Druck, z. B. von 500 mbar. In diesem Fall wird man natürlich in der Regel auf eine Zugabe von Alkohol verzichten.

Die Menge der Säure wird zweckmäßig so bemessen, daß sich ein pH von 1 bis 8, vorzugsweise von 3 bis 6 und insbesondere von 3 bis 5 einstellt. Die Menge des Wassers und gegebenenfalls des Alkohols werden vorteilhaft so gewählt, daß die Viskosität der Reaktionsmischung nach dem Oligomerisierungsschritt (c) bei 20 °C 500.000 mPa s, vorteilhaft 500 mPa s, gemessen nach DIN 53015, nicht überschreitet. Reaktionsmischungen mit höherer Viskosität sind zwar als Mittel zur Oberflächenbehandlung ebenfalls wirksam, aber verfahrenstechnisch weniger gut handhabbar. Die Temperatur der Reaktionsmischungen während der Zugabe der Säure beträgt im allgemeinen 10 bis 80 °C.

Statt der Mischung der Komponente 1 mit den Komponenten II, III und bzw. oder IV zunächst nur Wasser und dann Säure sowie gegebenenfalls Wasser und Alkohol zuzusetzen, kann man ihr auch gleichzeitig Wasser und Säure sowie gegebenenfalls Alkohol zufügen. Weiterhin ist es natürlich auch möglich, statt der genannten Mischung der Komponenten Wasser zuzusetzen die Mischung in Wasser einzutragen und dann Säure sowie gegebenenfalls Alkohol zuzufügen. Bei einer weiteren Variante trägt man die Mischung in eine wäßrige oder wäßrig-alkoholische Säure ein. Die getrennte Zugabe, wie zuvor beschrieben, wird jedoch bevorzugt, weil sie eine bessere Regelung des Reaktionsablaufs ermöglicht.

Die Produkte der Stufe (b) sind im allgemeinen klare Mischungen. Wenn im Einzelfall Trübungen oder Ausfällungen auftreten, kann man diese durch Sedimentation und/oder Filtration abtrennen, beispielsweise mittels eines Dekanters, Separators, einer Drucknutsche oder eines ähnlichen Apparates. Ein wichtiges, wirkungsverbesserndes Merkmal der Erfindung besteht darin, daß die in der Stufe (b) mit Säure behandelten Cokondensate in der Stufe (c) unter Vergrößerung der Teilchengröße oligomerisiert werden. Die Teilchengrößenverteilung vor und nach der Oligomerisierung kann mono- oder multimodal sein. Die durchschnittliche Teilchengröße d50 (= Korndurchmesser bei 50% Durchgangssumme) des Polyorganosiloxan-Cokondensats beträgt vor der Oligomerisierung in der Regel 0,001 bis 0,02 µm und nach der Oligomerisierung 0,03 bis 1 µm, bestimmt durch Laser-Lichtstreuung. Ein geeignetes Meßinstrument ist z. B. der Microtrac Ultrafine Particle Analyzer der US-Fa. Leeds & Northrup. Bei durchschnittlichen Teilchengrößen von etwa 0,02 µm sind die erfindungsgemäßen Mischungen opaleszierend. Mit zunehmender durchschnittlicher Teilchengröße verändert sich das Erscheinungsbild in Richtung auf milchig-trüb. Bei gleichem Feststoffgehalt steigt also die - mittels Trübungsphotometer in üblicher Weise bestimmbare - Trübung einer Mischung mit steigender durchschnittlicher Teilchengröße.

Bei der Oligomerisierung laufen vermutlich weitere Kondensationsreaktionen ab. Die Oligomerisierung wird in dem angegebenen pH-Bereich durch zweckentsprechende Kombination von Reaktionszeit und Reaktionstemperatur bewirkt. Bei Raumtemperatur gelingt die Oligomerisierung durch Lagerung über mehrere Monate. Durch Anwendung höherer Temperaturen läßt sich die erforderliche Zeit entsprechend verkürzen. Geeignete Oligomerisierungsbedingungen sind z. B. pH 3 bis 5 und 10 Minuten bis 5 Stunden bei einer Temperatur von 80 °C bis zur Siedetemperaturdes in dem Reaktionsgemisch vorhandenen Wassers (bzw. des gegebenenfalls enthaltenen Alkohols). Vor der Oligomerisierung kann das Reaktionsgemisch der Stufe (b) mit Wasser und/oder Alkohol verdünnt werden. Zweckmäßig beträgt die Konzentration des Cokondensats 0,005 bis 85 Gew.-% und der Gehalt an Alkohol 0 bis 85 Gew.-%. Die Oligomerisierung kann durch Erhöhung des pH auf einen Wert oberhalb von 5, vorteilhaft oberhalb von 6 beschleunigt werden, gegebenenfalls durch Zusatz entsprechender Mengen von Natron- oder Kalilauge, Natrium- oder Kaliumcarbonat, Ammoniak, Alkylaminen oder Alkanolaminen. Da die auf diese Weise oligomerisierten Systeme in manchen Fällen nicht hinreichend lagerstabil sind, senkt man den pH nach der Oligomerisierung zweckmäßig wieder auf einen Wert < 6, vorteilhaft < 5 ab.

Die erfindungsgemäßen oligomerisierten Polyorganosiloxan-Cokondensate fallen, gegebenenfalls nach Abtrennung geringer Mengen an grobteiligen Bestandteilen, als opaleszierende bis milchig-trübe wäßrige oder wäßrig-alkoholische Mischungen an, die sich mit Wasser oder Alkoholen, wie den zuvor genannten, in beliebigen Verhältnissen verdünnen lassen, in der Regel keine physiologisch bedenklichen Bestandteile und auch keine Emulgatoren enthalten. Sie können als kolloidale oder selbstemulgierte Systeme aufgefaßt werden und eignen sich, wie gesagt, hervorragend zur hydrophoben und gegebenenfalls zusätzlich oleophoben Ausrüstung verschiedenartigster Substrate, wie Glas (z. B. in Form von Flachglas, Glasfasern oder Glasperlen), Füllstoffe und Pigmente, Metalle, polymere Kunststoffe, Textilfasern (einschließlich Baumwolle, Wolle, Seide sowie synthetischer organischer und Mineralfasern), zellulosische Materialien, wie Holz oder Papier, sowie mineralische Baustoffe (z. B. Granit, Marmor, andere Natursteine, Kunststeine, Kalksandstein, Beton, Ziegel, Fliesen oder Keramik). Besonders vorteilhaft sind die erfindungsgemäßen Systeme als Hilfsmittel zur Veredelung von Leder, Lederfasermaterialien und Pelzen, die gegenüber den Hilfsmitteln nach den erwähnten Patentanmeldungen 196 49 953, 196 49 954 und 196 49 955 überraschende Vorteile zeigen. Diese älteren Hilfsmittel bewirken zwar einen guten Abperleffekt, d. h. Wassertropfen und Öltropfen (Mineralöle, Thermoöle, Siliconöle) dringen nicht in das Leder ein. Bei anderen in der Lederindustrie üblichen Tests, z. B. dem Penetrometer-Test nach DIN 53 338 oder dem Maeser-Test nach ASTM D 2099-70, werden jedoch nur unzureichende Werte erzielt. Außerdem sind die ausgerüsteten Leder sehr hart, so daß sie sich nicht für Anwendungen, wie Schuhoberleder oder Bekleidungsleder, eignen. Schließlich haben auch einige der älteren Hilfsmittel den Nachteil, daß der erwähnte gute Abperleffekt nur durch Anwendung hoher Temperaturen, z. B. eine Trocknung deutlich oberhalb von 120 °C, zu erzielen sind. Das führt nicht nur, wie erwähnt, zu hartem Leder, sondern kann auch Narbenplatzen hervorrufen. Die erfindungsgemäßen oligomerisierte Polyorganosiloxan-Cokondensate enthaltenden Systeme vermeiden oder vermindern diese Nachteile, wenn man sie auf Leder, Lederfasermaterialien oder Pelzen anwendet, beispielsweise durch Tauchen, Aufsprühen oder Einpolieren. Ein besonderer Vorteil der erfindungsgemäßen oligomerisierten Polyorganosiloxan-Cokondensate besteht darin, daß sie ihre Wirkung in akzeptable Zeiträumen bereits bei Raumtemperatur entfalten. Die für den gleichen Verwendungszweck bestimmten älteren Produkte erfordern dagegen höhere Temperaturen und/oder unwirtschaftlich lange Reaktionszeiten.

Zweckmäßig wendet man die oligomerisierte Polyorganosiloxan-Cokondensate enthaltenden Systeme in verdünnter Form an, so daß der Gehalt an Cokondensat 0,005 bis 20, insbesondere 0,5 bis 5 Gew.-% beträgt. Wenn man zur Erleichterung oder Intensivierung des Ausrüstungsvorgangs einen Alkohol, z. B. einen der zuvor genannten Alkohole, oder ein anderes mit Wasser verträgliches Lösemittel, beispielsweise ein Keton, Glykol. einen Glykolether, oder ein kationisches oder nichtionisches Tensid mitverwendet, beträgt dessen Gehalt im allgemeinen bis zu 85 Gew.-%, vorteilhaft bis zu 2 Gew.-%.

Neben der Verwendung als Hydrophobierungs- und gegebenenfalls Oleophobierungsmittel sowie als Trennmittel oder schmutzabweisende Beschichtungsmittel können die erfindungsgemäßen oligomerisierten Polyorganosiloxan-Cokondensate auch als Vernetzer; Haftvermittler, insbesondere für Fluorpolymere, wie Teflon®, oder auf Fluorpolymeren basierenden Lacke; sowie als Zusatzstoffe für Farben und Lacke verwendet werden.
Die Erfindung wird durch die folgenden Beispiele näher erläutert, nicht aber in ihrem Anwendungsbereich begrenzt.

### Beispiele

### Apparatur für die Herstellungsbeispiele

Laborrührkesselreaktor mit Innentemperaturmessung und temperierbar, mit Flüssigkeitsdosiereinrichtung, Destillationsbrücke mit Kopftemperaturmessung, Verflüssigungskühler und Flüssigkeitsvorlage. Weiterhin Labordrucknutsche mit 2 l Inhalt.

### Legende der Abkürzungen:

DYNASYLAN® AMEO = 3-Aminopropyltriethoxysilan
DYNASYLAN® F 8161 = Tridecafluor-1,1,2,2-tetrahydrooctyl-1-trimethoxysilan
DYNASYLAN® F 8261 = Tridecafluor-1,1,2,2-tetrahydrooctyl-1-triethoxysilan

### Messung der durchschnittlichen Teilchengöße d50

Die durchschnittliche Teilchengröße d50 (= Korndurchmesser bei 50 % Durchgangssumme) wurde durch Laser-Lichtstreuung mittels eines Microtrac Ultrafine Particle Analyzers der US-Fa. Leeds & Northrup bestimmt.

Alle angegebenen Teile sind Gewichtsteile.

### Herstellungsbeispiele (H-Beispiele)

### Beispiel H1

### Herstellung eines wasserlöslichen oligomerisierten Cokondensates aus DYNASYLAN® AMEO und DYNASYLAN® F 8161

In der oben beschriebenen Apparatur mit einem 250-ml-Rührreaktor werden 44,2 g DYNASYLAN® AMEO und 93,4 g DYNASYLAN® F 8161 vorgelegt. 14,4 g Wasser werden über die Dosiervorrichtung zugegeben. Die Temperatur steigt hierbei von 20 auf 30 °C. Das Reaktionsgemisch wird 3 Stunden bei 55 bis 60 °C gerührt. Anschließend wird das Reaktionsgemisch auf ca. 30 °C abgekühlt, und innerhalb von ca. 10 Minuten werden 11,9 g Ameisensäure (85 Gew.-% in Wasser) zugegeben. Die Temperatur steigt dabei auf ca. 40 bis 50 °C an. Die durchschnittliche Teilchengröße d50 in der klaren Mischung beträgt 0,01 µm, gemessen nach Verdünnung von 1 Teil der Mischung mit 9 Teilen Wasser.

Die Oligomerisierung erfolgt, indem man 1 Teil der Reaktionsmischung mit 9 Teilen Wasser mischt und die Mischung mit einem pH von 4,5 für 1 Stunde auf ca.90 °C erhitzt. Die ursprünglich klare Mischung wird opaleszierend. Die durchschnittliche Teilchengröße d50 des oligomerisierten Polyorganosiloxan-Cokondensats in der opaleszierenden Mischung beträgt 0,03 µm.

### Beispiel H2

### Herstellung eines wasserlöslichen oligomerisierten Cokondensates aus DYNASYLAN® AMEO und DYNASYLAN® F 8261

In der oben beschriebenen Apparatur mit einem 4 000-ml-Rührreaktor werden 1326 g DYNASYLAN® AMEO und 1530 g DYNASYLAN® F 8261 vorgelegt. 162 g Wasser werden über die Dosiervorrichtung zugegeben. Die Temperatur steigt hierbei von 20 auf 30 °C. Das Reaktionsgemisch wird 3 Stunden bei 55 bis 60 °C gerührt. Anschließend wird das Reaktionsgemisch auf ca. 30 °C abgekühlt. Innerhalb von ca. 20 Minuten werden 357 g Ameisensäure (85 Gew.-% in Wasser) zugegeben. Die Temperatur steigt hierbei auf ca. 40 bis 50 °C an.

Die Oligomerisierung erfolgt, indem man 1 Teil der Reaktionsmischung mit 9 Teilen Wasser mischt und die Mischung mit einem pH von 4,5 für 1 Stunde auf ca. 96 °C (Sieden unter Rückfluß) erhitzt. Die durchschnittliche Teilchengröße d50 des Polyorganosiloxan-Cokondensats in der opaleszierenden Flüssigkeit beträgt 0,063 µm.

### Beispiel H3

### Herstellung eines wasserlöslichen oligomerisierten Cokondensates aus DYNASYLAN® AMEO und DYNASYLAN® F 8261

In der oben beschriebenen Apparatur mit einem 4 000-ml-Rührreaktor werden 1326 g DYNASYLAN® AMEO und 1530 g DYNASYLAN® F 8261 vorgelegt. 162 g Wasser werden über die Dosiervorrichtung zugegeben. Die Temperatur steigt hierbei von 20 auf 30 °C. Das Reaktionsgemisch wird 3 Stunden bei 55 bis 60 °C gerührt. Anschließend wird das Reaktionsgemisch auf ca. 30 °C abgekühlt, und innerhalb von ca. 20 Minuten werden 357 g Ameisensäure (85 Gew.-% in Wasser) zugegeben. Die Temperatur steigt dabei auf ca. 40 bis 50 °C an.

Die Oligomerisierung erfolgt, indem man 3 Teile der Reaktionsmischung mit 7 Teilen Wasser mischt und die Mischung mit einem pH von 4,5 1 Stunde auf ca. 91 °C (Sieden unter Rückfluß) erhitzt. Die ursprünglich klare Mischung wird milchig trübe. Die durchschnittliche Teilchengröße d50 des Polyorganosiloxan-Cokondensats in der milchig trüben Mischung beträgt 0,192 µm.

### Beispiel H4

### Herstellung eines wasserlöslichen, durch Lagerung bei Raumtemperatur oligomerisierten Cokondensates aus DYNASYLAN® AMEO. Propylmethyldimethoxysilan und Propyltrimethoxysilan

265,2 g DYNASYLAN® AMEO, 88,8 g Propylmethyldimethoxysilan und 98,4 g Propyltrimethoxysilan werden vorgelegt. Innerhalb von 10 Minuten werden 86,4 g Wasser zudosiert. Die Temperatur steigt dabei von 25 auf 50 °C an. Das Reaktionsgemisch wird 2 Stunden bei 60 °C gerührt. Anschließend destilliert man 136 g des durch Hydrolyse entstandenen Alkohols ab. 274 g Wasser und 72,3 g Ameisensäure (85 Gew.-% in Wasser) werden gemischt, und die Mischung wird innerhalb von 15 Minuten unter leichtem Temperaturanstieg zudosiert. Anschließend destilliert man ein ternäres Methanol/Ethanol/Wasser-Gemisch. Gleichzeitig wird in dem Maße Wasser zudosiert, in dem das Gemisch abdestilliert, so daß das Volumen des Reaktionsgemisches konstant bleibt. Man beendet die Destillation, wenn nur noch Wasser überdestilliert. Das Reaktionsgemisch ist völlig klar und wird zwecks Oligomerisierung bei Raumtemperatur 6 Monate gealtert. Die Messung der dabei eingetretenen Trübung mit einem Trübungsphotometer nach DIN EN 27 027 liefert einen Wert von 98 TE/F. Die Trübung zeigt ein signifikantes Anwachsen der Teilchengröße an. Es treten jedoch keine Sedimentationserscheinungen auf, was für das Vorliegen eines stabilen Systems spricht.

### Beispiel H5

### Herstellung eines wasserlöslichen, bei erhöhter Temperatur oligomerisierten Cokondensates aus DYNASYLAN® AMEO, Propylmethyldimethoxysilan und Propyltrimethoxysilan

265,2 g DYNASYLAN® AMEO, 88,8 g Propylmethyldimethoxysilan und 98,4 g Propyltrimethoxysilan werden vorgelegt. Innerhalb von 10 Minuten werden 86,4 g Wasser zudosiert. Die Temperatur steigt dabei von 25 auf 50 °C an. Das Reaktionsgemisch wird 2 Stunden bei 60 °C gerührt. Anschließend destilliert man 136 g des durch Hydrolyse entstandenen Alkohols ab. 274 g Wasser und 72,3 g Ameisensäure (85 Gew.-% in Wasser) werden gemischt, und die Mischung wird innerhalb von 15 Minuten unter leichtem Temperaturanstieg zudosiert. Anschließend destilliert man ein ternäres Methanol/Ethanol/Wasser-Gemisch. Gleichzeitig wird in dem Maße Wasser zudosiert, in dem das Gemisch abdestilliert, so daß das Volumen des Reaktionsgemisches konstant bleibt. Man beendet die Destillation, wenn nur noch Wasser überdestilliert. Das Reaktionsgemisch ist völlig klar und wird zwecks Oligomerisierung 6 Stunden auf 90 °C erhitzt. Die Messung der dabei eingetretenen Trübung mit einem Trübungsphotometer nach DIN EN 27 027 liefert einen Wert von 166 TE/F. Die Trübung zeigt eine signifikantes Anwachsen der Teilchengröße an. Es treten jedoch keine Sedimentationserscheinungen auf, was für das Vorliegen eines stabilen Systems spricht.

### Beispiel H6

### Herstellung eines wasserlöslichen, bei verändertem pH oligomerisierten Cokondensates aus DYNASYLAN® AMEO. Propylmethyldimethoxysilan und Propyltrimethoxysilan

265,2 g DYNASILAN® AMEO, 88,8 g Propylmethyldimethoxysilan und 98,4 g Propyltrimethoxysilan werden vorgelegt. Innerhalb von 10 Minuten werden 86,4 g Wasser zudosiert. Die Temperatur steigt dabei von 25 auf 50 °C an. Das Reaktionsgemisch wird 2 Stunden bei 60 °C gerührt. Anschließend destilliert man 136 g des durch Hydrolyse entstandenen Alkohols ab. 274 g Wasser und 72,3 g Ameisensäure (85 Gew.-% in Wasser) werden gemischt, und die Mischung wird innerhalb von 15 Minuten unter leichtem Temperaturanstieg zudosiert. Anschließend destilliert man ein ternäres Methanol/Ethanol/Wasser-Gemisch. Gleichzeitig wird in dem Maße Wasser zudosiert, in dem das Gemisch abdestilliert, so daß das Volumen des Reaktionsgemisches konstant bleibt. Man beendet die Destillation, wenn nur noch Wasser überdestilliert. Das Reaktionsgemisch ist völlig klar und hat einen pH von 4,5 Durch Zugabe von verdünnter Ammoniaklösung wird der pH auf 6,5 eingestellt. Die Messung der innerhalb 1 Stunde eingetretenen Trübung mit einem Trübungsphotometer nach DIN EN 27 027 liefert einen Wert von 98 TE/F. Der pH wird mittels verdünnter Ameisensäure wieder auf 4,5 eingestellt. Die Trübung zeigt eine signifikantes Anwachsen der Teilchengröße an. Es treten jedoch keine Sedimentationserscheinungen auf, was für das Vorliegen eines stabilen Systems spricht.

### Beispiel H7 (Vergleichsbeispiel)

### Herstellung eines wasserlöslichen, nicht oligomerisierten Cokondensates aus DYNASYLAN® AMEO und DYNASYLAN® F 8261

In der oben beschriebenen Apparatur mit einem 4 000-ml-Rührreaktor werden 1 326 g DYNASYLAN® AMEO und 1530 g DYNASYLAN® F 8261 vorgelegt. 162 g Wasser werden über die Dosiervorrichtung zugegeben. Die Temperatur steigt hierbei von 20 auf 30 °C. Das Reaktionsgemisch wird 3 Stunden bei 55 bis 60 °C gerührt. Anschließend wird das Reaktionsgemisch auf ca. 30 °C abgekühlt. Innerhalb von ca. 20 Minuten werden 357 g Ameisensäure (85 Gew.-% in Wasser) zugegeben. Die Temperatur steigt hierbei auf ca. 40 bis 50 °C an.

In der vollständig durchsichtigen und für das Auge nicht trüben Lösung wird eine Teilchengröße d50 des Polyorganosiloxan-Cokondensats von 0.010 gemessen (nach Verdünnung von 1 Teil der Mischung mit 9 Teilen Wasser).

### Beispiel H8 (Vergleichsbeispiel)

### Herstellung eines wasserlöslichen, nicht oligomerisierten Cokondensates aus DYNASILAN® AMEO, Propylmethyldimethoxysilan und Propyltrimethoxysilan

265,2 g DYNASILAN® AMEO, 88,8 g Propylmethyldimethoxysilan und 98,4 g Propyltrimethoxysilan werden vorgelegt. Innerhalb von 10 Minuten werden 86,4 g Wasser zudosiert. Die Temperatur steigt dabei von 25 auf 50 °C an. Das Reaktionsgemisch wird 2 Stunden bei 60 °C gerührt. Anschließend destilliert man 136 g des durch Hydrolyse entstandenen Alkohols ab. 274 g Wasser und 72,3 g Ameisensäure (85 Gew.-% in Wasser) werden gemischt, und die Mischung wird innerhalb von 15 Minuten unter leichtem Temperaturanstieg zudosiert. Anschließend destilliert man ein ternäres Methanol/Ethanol/Wasser-Gemisch. Gleichzeitig wird in dem Maße Wasser zudosiert, in dem das Gemisch abdestilliert, so daß das Volumen des Reaktionsgemisches konstant bleibt. Man beendet die Destillation, wenn nur noch Wasser überdestilliert. Das Reaktionsgemisch ist nach Verdünnung auf einen Gehalt 20 Gew.-%, bezogen auf die eingesetzten Alkoxysilane, für das Auge völlig klar und kann mit Wasser in jedem Verhältnis verdünnt werden. Die Messung der Trübung mit einem Trübungsphotometer nach DIN EN 27 027 liefert einen Wert von 2,4 TE/F.

### Anwendungsbeispiele (A-Beispiele)

### Beispiel A1

### Behandlung von mineralischen Oberflächen mit oligomerisiertem Polyorganosiloxan-Cokondensat aus den Beispielen H1, H2 und H3

Ziegel-, Kalksand- und Betonsteine wurden in Würfel mit einer Kantenlänge von ca. 5 cm geschnitten und ca. 5 Minuten in die wäßrige, erfindungsgemäße Oligomerisierungsmischung aus Beispiel H1, H2 oder H3 getaucht, die in einer Weise mit Wasser verdünnt war, daß die Konzentration an Polyorganosiloxan-Cokondensat einer berechneten Konzentration an eingesetztem Fluoralkyltrialkoxysilan von 0,5 Gew.-% entsprach. Nach Trocknung der Steine bei Raumtemperatur oder im Trockenschrank bei ca. 120°C dringt auf die Oberfläche der Steine aufgetragenes Wasser sowie auch Öl (Mineralöl, Thermoöl Marlotherm S oder Siliconöl) nicht mehr in die Oberfläche der Baustoffe ein. Der Abperleffekt für die genannten Flüssigkeiten ist sehr gut. Bei unbehandelten Proben dringen die genannten Flüssigkeiten sofort in die Oberfläche ein. Die oligomerisierten Polyorganosiloxan-Cokondensate eignen sich damit zur gleichzeitigen Hydro- und Oleophobierung von mineralischen Baustoffen.

### Beispiel A2

### Behandlung von mineralischen Oberflächen mit oligomerisiertem Polvorganosiloxan-Cokondensat aus den Beispielen H1, H2 oder H3

Man verfährt wie in Beispiel A1, verdünnt jedoch die Oligomerisierungsmischung der Beispiele H1, H2 oder H3 in einer Weise, daß die Konzentration an Polyorganosiloxan-Cokondensat einer berechneten Konzentration an eingesetztem Fluoralkyltrialkoxysilan von 5 Gew.-% entspricht. Die Abperleffekte für Wasser und Öl entsprechen den Effekten des Beispiels A1.

### Beispiel A3

### Behandlung von mineralischen Oberflächen mit oligomerisiertem Polyorganosiloxan-Cokondensat aus den Beispielen H1, H2 oder H3

Man verfährt wie in Beispiel A1, verdünnt jedoch die Oligomerisierungsmischung der Beispiele H1, H2 oder H3 in einer Weise, daß die Konzentration an Polyorganosiloxan-Cokondensat einer berechneten Konzentration an eingesetztem Fluoralkyltrialkoxysilan von 0,01 Gew.-% entspricht. Die Abperleffekte für Wasser und Öl entsprechen den Effekten des Beispiels A1.

### Beispiel A4

### Behandlung von mineralischen Oberflächen mit oligomerisiertem Polyorganosiloxan-Cokondensat aus den Beispielen H1, H2 oder H3

Man verfährt wie in Beispiel A1, verdünnt jedoch die Oligomerisierungsmischung der Beispiele H1, H2 oder H3 in einer Weise mit Wasser, daß die Konzentration an Polyorganosiloxan-Cokondensat einer berechneten Konzentration an eingesetztem Fluoralkylalkoxysilan von 0,005 Gew.-% entspricht. Nach dem Trocknen bei ca. 120 °C dringen Wasser und Öl nach einigen Minuten in die Oberfläche der Baustoffe ein. Die Abperleffekte für die genannten Flüssigkeiten sind zwar noch vorhanden, jedoch nur schwach ausgeprägt und von kurzer Dauer.

### Beispiel A5

### Behandlung von mineralischen Oberflächen mit oligomerisiertem Polyorganosiloxan-Cokondensat aus den Beispielen H1, H2 oder H3

Man verfährt wie in Beispiel A1, verdünnt jedoch die Oligomerisierungsmischung der Beispiele H1, H2 oder H3 so stark mit Wasser, daß die Konzentration an Polyorganosiloxan-Cokondensat einer berechneten Konzentration an Fluoralkylalkoxysilan von 0,0001 Gew.-% entspricht. Nach dem Trocknen bei ca. 120 °C dringen Wasser und Öl bald nach dem Auftragen in die Oberfläche der Baustoffe ein. Ein Abperleffekt für die genannten Flüssigkeiten wird praktisch nicht mehr beobachtet.

### Beispiel A6

### Behandlung von Baumwolle mit oligomerisiertem Polyorganosiloxan-Cokondensat aus den Beispielen H1, H2 oder H3

Baumwollstoff wurde in Quadrate mit einer Kantenlänge von ca. 5 cm geschnitten, und die quadratischen Stücke wurden ca. 5 Minuten in eine wäßrige, erfindungsgemäße Oligomerisierungsmischung aus den Beispielen H1, H2 oder H3 getaucht, die in einer Weise mit Wasser verdünnt, daß die Konzentration an Polyorganosiloxan-Cokondensat einer berechneten Konzentration an eingesetztem Fluoralkylalkoxysilan von 1,0 Gew.-% entsprach. Nach Trocknung der Stoffstücke bei Raumtemperatur dringt auf die Oberfläche der Stoffstücke aufgetragenes Wasser sowie auch Öl (Mineralöl, Thermoöl Marlotherm S oder auch Siliconöl) nicht mehr in die Oberfläche der Stoffstücke ein. Der Abperleffekt für die genannten Flüssigkeiten ist sehr gut. Bei unbehandelten Proben dringen die genannten Flüssigkeiten sofort in die Oberfläche ein. Die oligomerisierten Polyorganosiloxan-Cokondensate eignen sich damit zur gleichzeitigen Hydro- und Oleophobierung von Baumwolle.

### Beispiel A7

### Behandlung von Holz mit oligomerisiertem Polyorganosiloxan-Cokondensat aus den Beispielen H1, H2 oder H3

Eine ca. 0,5 cm starke Holzplatte wurde in Rechtecke mit einer Kantenlänge von ca. 3 x 5 cm geschnitten, und die Holzstücke wurden ca. 5 Minuten in eine wäßrige, erfindungsgemäße Oligomerisierungsmischung der Beispiele H1, H2 oder H3 getaucht, die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach Trocknung der Holzstücke bei Raumtemperatur dringt auf die Oberfläche der Holzstücke aufgetragenes Wasser sowie auch Öl (Mineralöl, Thermoöl Marlotherm S oder auch Siliconöl) nicht mehr in die Oberfläche der Holzstücke ein. Der Abperleffekt für die genannten Flüssigkeiten ist sehr gut. Bei unbehandelten Proben dringen die genannten Flüssigkeiten sofort in die Oberfläche ein. Die oligomerisierten Polyorganosiloxan-Cokondensate eignen sich damit zur gleichzeitigen Hydro- und Oleophobierung von Holz.

### Beispiel A8

### Behandlung von Papier mit oligomerisiertem Polyorganosiloxan-Cokondensat aus den Beispielen H1, H2 oder H3

Papiertaschentücher wurden in Stücke mit einer Kantenlänge von ca. 5 cm geschnitten und ca. 5 Minuten in eine wäßrige, erfindungsgemäße Oligomerisierungsmischung der Beispiele H1, H2 oder H3 getaucht, die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach Trocknung der Papierstücke bei Raumtemperatur dringt auf die Oberfläche der Papierstücke aufgetragenes Wasser sowie auch Öl (Mineralöl, Thermoöl Marlotherm S oder auch Siliconöl) nicht mehr in die Oberfläche der Papierstücke ein. Der Abperleffekt für die genannten Flüssigkeiten ist sehr gut. Bei unbehandelten Proben dringen die genannten Flüssigkeiten sofort in die Oberfläche ein. Die oligomerisierten Polyorganosiloxan-Cokondensate eignen sich damit zur gleichzeitigen Hydro- und Oleophobierung von Papier.

### Beispiel A9

### Behandlung von Glas mit oligomerisiertem Polyorganosiloxan-Cokondensat aus den Beispielen H1, H2 oder H3

Glasscheiben mit einer Kantenlänge von ca. 10 x 20 cm wurden ca. 5 Minuten in eine wäßrige, erfindungsgemäße Oligomerisierungsmischung der Beispiele H1, H2 oder H3 getaucht, die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach Abtropfen und Trocknung der Glasscheiben bei Raumtemperatur perlt auf die Oberfläche der Glasscheiben aufgetragenes Wasser sowie auch Öl (Mineralöl, Thermoöl Marlotherm S oder auch Siliconöl) deutlich ab. Der Randwinkel für die genannten Flüssigkeiten ist > 90°. Bei unbehandelten Proben ist der Randwinkel deutlich < 90°. Die Oligomerisierungsmischung hinterläßt auf der Glasscheibe einen Film und eignet sich zur gleichzeitigen Hydro- und Oleophobierung von Glas. Auch nach 5stündiger Einwirkung von siedendem Wasser auf die behandelten Glasscheiben wird beim Aufbringen eines Wassertropfens auf die Glasoberfläche keine signifikante Änderung des Randwinkels festgestellt.

### Beispiel A10

### Behandlung von Metalloberflächen mit oligomerisiertem Polyorganosiloxan-Cokondensat aus den Beispielen H1, H2 oder H3

Ca. 1 mm starke, sandgestrahlte Stahlplatten sowie Stücke aus Aluminiumfolie mit einer Kantenlänge von ca. 10 x 20 cm wurden ca. 5 Minuten in die wäßrige, erfindungsgemäße Oligomerisierungsmischung der Beispiele H1, H2 oder H3 getaucht, die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach Abtropfen und Trocknung der Stahlstücke bei Raumtemperatur perlt auf die Oberfläche der Stahlstücke aufgetragenes Wasser sowie auch Öl (Mineralöl, Thermoöl Marlotherm S oder auch Siliconöl) deutlich ab. Das Produkt erzeugt einen Film auf der Metalloberfläche. Die visuell beurteilten Randwinkel sind bei den behandelten Metallproben deutlich höher als bei nicht behandelten. Die oligomerisierten Polyorganosiloxan-Cokondensate eignen sich damit zur gleichzeitigen Hydro- und Oleophobierung von Metalloberflächen. Die Lagerung beschichteter und unbeschichteter Stahlplatten in wäßriger Salzsäure ergibt eine deutlich geringere Korrosion bei den mit wäßriger Oligomerisierungsmischung beschichteten Stahlplatten. Auf die beschichteten Stahlplatten aufgetragener flüssiger thermoplastischer PE-Kunststoff haftet im Gegensatz zu unbeschichteten Stahlplatten nicht mehr auf der Stahlplatte. Die Polyorganosiloxan-Cokondensate eignen sich daher als Trennmittel, z. B. zur Antihaft-Ausrüstung von Extruderschnecken.

### Beispiel A11

### Behandlung von Kunststoffoberflächen mit oligomerisiertem Polvorganosiloxan-Cokondensat aus den Beispielen H1. H2 oder H3

Ca. 1 mm starke Kunststoffplatten aus Polymethylmethacrylat, Polyvinylchlorid, Polyethylen, Polypropylen, Polystyrol und Polyamid 6 wurden ca. 5 Minuten in die wäßrige, erfindungsgemäße Oligomerisierungsmischung der Beispiele H1, H2 oder H3 getaucht. die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach Abtropfen und Trocknung der Kunstoffplättchen bei Raumtemperatur perlt auf die Oberfläche der Kunststoffstücke aufgetragenes Wasser sowie auch Öl (Mineralöl, Thermoöl Marlotherm S oder auch Siliconöl) deutlich ab. Der Abperleffekt für die genannten Flüssigkeiten ist sehr gut. Bei unbehandelten Proben ist der Randwinkel nach visueller Beurteilung wesentlich geringer. Die oligomerisierten Polyorganosiloxan-Cokondensate eignen sich damit zur gleichzeitigen Hydro- und Oleophobierung von Kunststoffoberflächen.

### Beispiel A12

### Behandlung von Autolackoberflächen mit oligomerisiertem Polyorganosiloxan-Cokondensat aus den Beispielen H1, H2 oder H3

Autolackoberflächen wurden mit der wäßrigen, erfindungsgsmäßen Oligomerisierungsmischung der Beispiele H1, H2 oder H3 besprüht die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach ca. 15 Minuten zeigt sich auf der Lackoberfläche ein dauerhafter Wasser-Abperleffekt. Verschmutzungen lassen sich leichter entfernen als von unbehandelten Lackoberflächen. Die Beschichtung war dauerhaft und Überstand einen Fahrzeugbetrieb von mehr als einem halben Jahr, ohne daß eine Nachbehandlung erforderlich wurde. Die Polyorganosiloxan-Cokondensate eignen sich daher zur Antischmutz-Ausrüstung lackierter Oberflächen, z. B. von PKWs, LKWs, Eisenbahnwaggons, Maschinen, Fassaden und dergleichen im Innen- und im Außeneinsatz.

### Beispiel A13

### Behandlung von mineralischen Fassadenelementen mit oligomerisiertem Polyorganosiloxan-Cokondensat aus den Beispielen H1, H2 oder H3

Polierter Granit, Marmor, Sandstein, Kunststein und keramische Fliesen wurden mit der wäßrigen, erfindungsgemäßen Oligomerisierungsmischung der Beispiele H1, H2 oder H3 besprüht, die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Auf der Oberfläche gebildete Tröpfchen wurden mit einem Gummiwischer entfernt. Nach Trocknung der Oberflächen zeigte sich im Vergleich zu unbehandelten Oberflächen ein deutlicher Abperleffekt bezüglich aufgetragener Öl- und Wassertropfen. Öl und Wasser drangen in die porösen Substrate nicht mehr ein. Die Oberflächen ließen sich nach Verschmutzung leichter reinigen. Die oligomerisierten Polyorganosiloxan-Cokondensate eignen sich damit zur Antischmutz-Ausrüstung von Fassaden, Wänden, Fußböden und dergleichen.

### Beispiel A14

### Behandlung von Chrom-gegerbtem Leder mit oligomerisiertem Polyorganosiloxan-Cokondensat aus den Beispielen H1, H2 oder H3

Chrom-gegerbtes und im übrigen unvorbehandeltes Leder wurde ca. 5 Minuten in eine wäßrige, erfindungsgemäße Oligomerisierungsmischung der Beispiele H1, H2 oder H3 getaucht, die in einer Weise mit Wasser verdünnt war, daß die Konzentration an Polyorganosiloxan-Cokondensat einer berechneten Konzentration an Fluoralkylalkoxysilan von 1,0 Gew.-% entsprach. Nach Trocknung der Lederstücke bei Raumtemperatur (2 Tage) dringt auf die Oberfläche der Lederstücke aufgetragenes Wasser sowie auch Öl (Mineralöl, Thermoöl Marlotherm oder auch Siliconöl) nicht mehr in die Oberfläche der Lederstücke ein. Der Abperleffekt für die genannten Flüssigkeiten ist sehr gut. Bei unbehandelten Proben dringen die genannten Flüssigkeiten sofort in die Oberfläche ein. Das oligomerisierte Polyorganosiloxan-Cokondensat eignet sich damit zur gleichzeitigen Hydro- und Oleophobierung von Leder.

### Beispiel A15

### Behandlung von Leder mit dem oligomerisierten Polyorganosiloxan-Cokondensat aus Beispiel H2 in Kombination mit einem Fettungsmittel

Es wurde ein chromgegerbtes Oberleder im wet-blue-Stadium mit einer Falzstärke von 1,8 bis 2,0 mm verwendet. Die Behandlung erfolgte durch Tauchen in die unten tabellarisch angegebenen wäßrigen Flotten. Die Trocknung der DIN A3-großen Lederstücke erfolgte im Trockenschrank. Zur Ausführung des Maeser-Tests wurden aus einem DIN-A3-großen Lederstück zwei für die Maeser-Apparatur passende Lederstücke ausgeschnitten.

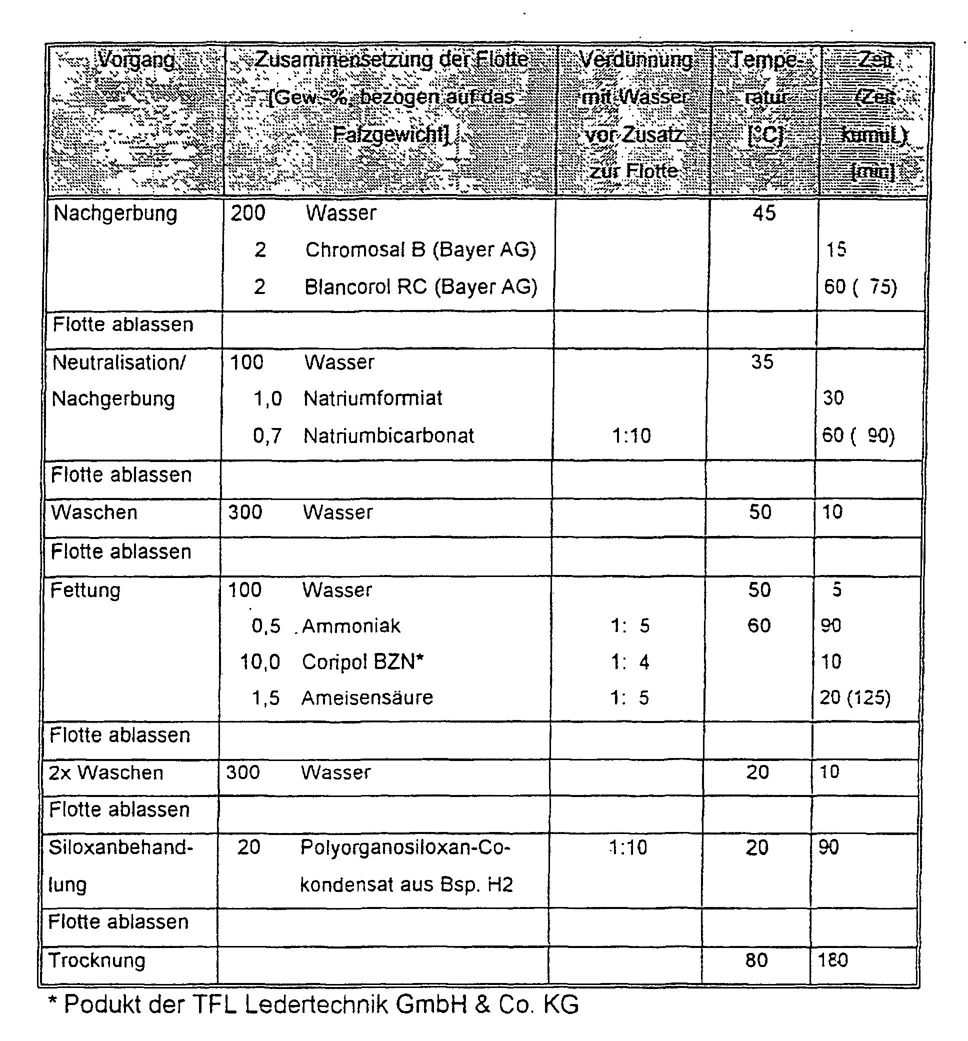

Das so behandelte Leder wurde gemäß ASTM D 2099-70 dem Maeser-Test unterzogen. Der Wasserdurchtritt erfolgte nach 11 200/11 000 Knickungen (Werte für zwei verschiedene Prüfkörper). Zwei nicht mit dem Polyorganosiloxan-Cokondensat behandelte Vergleichsmuster zeigten Wasserdurchtritt nach 700 bzw. 1 200 Knickungen. Die Prüfung auf Ölabweisung nach AATCC 118 [Bibliothek des Leders, Bd. 10, Seiten 148 ff. (1982)] ergab ohne Behandlung mit dem Polyorganosiloxan-Cokondensat die Stufe 0 (keine Ölabweisung), mit Behandlung die Stufe 1. Das oligomerisierte Polyorganosiloxan-Cokondensat eignet sich also zur gleichzeitigen Hydro- und Oleophobierung von Leder.

### Beispiel A16

### Behandlung von Leder mit dem oligomerisierten Polyorganosiloxan-Cokondensat aus Beispiel H2 in Kombination mit einem Hydrophobierungsmittel

Es wurde ein chromgegerbtes Oberleder im wet-blue-Stadium mit einer Falzstärke von 1,8 bis 2,0 mm verwendet. Die Behandlung erfolgte durch Tauchen in die unten tabellarisch angegebenen wäßrigen Flotten. Die Trocknung der DIN-A3-großen Lederstücke erfolgte im Trockenschrank. Zur Ausführung des Maeser-Tests wurden aus einem DIN-A3-großen Lederstück zwei für die Maeser-Apparatur passende Lederstücke ausgeschnitten.

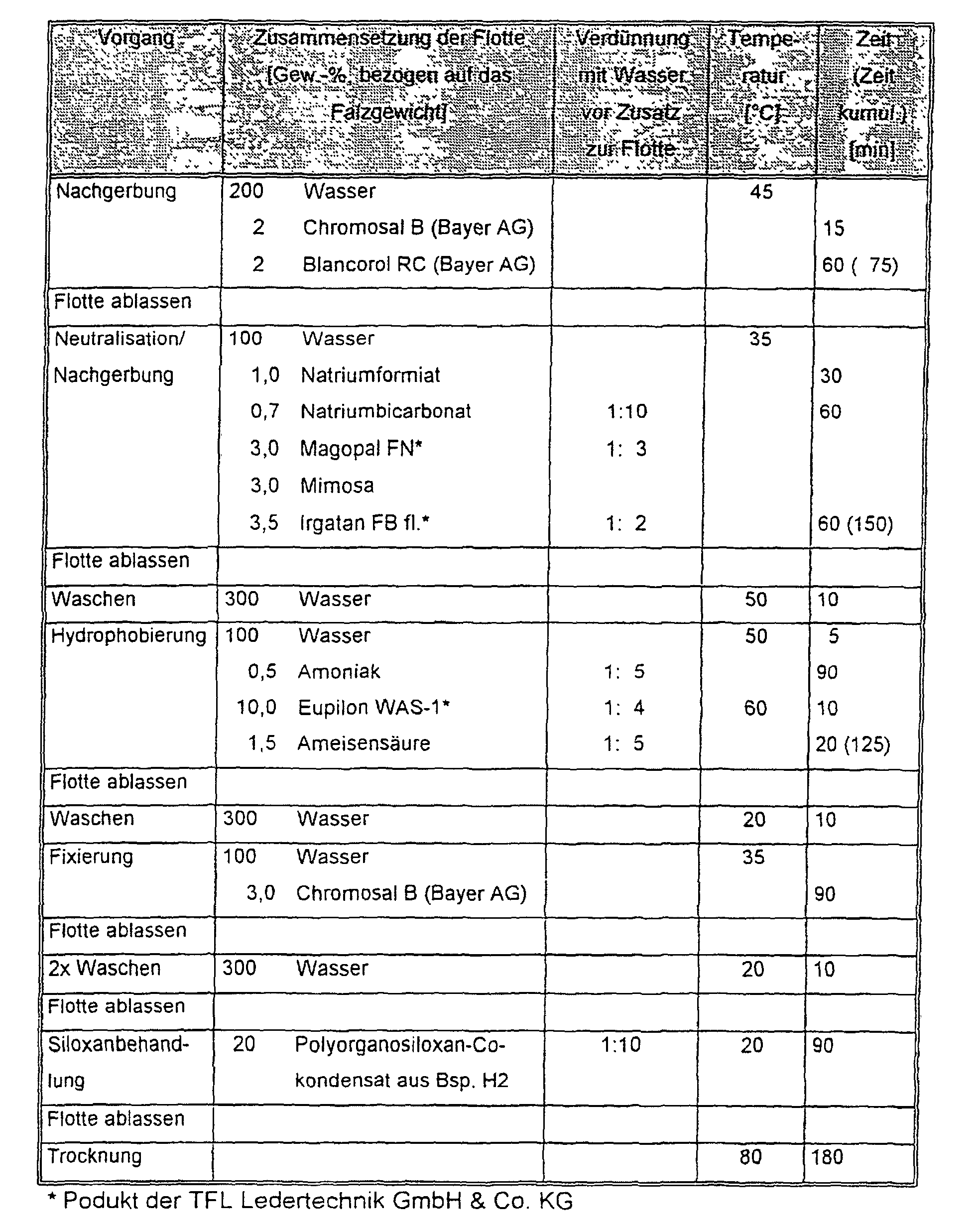

Das so behandelte Leder wurde gemäß ASTM D 2099-70 dem Maeser-Test unterzogen. Der Test wurde abgebrochen, nachdem auch nach 171 000 Knickungen kein Wasserdurchtritt erfolgte. Zwei nicht mit dem Polyorganosiloxan-Cokondensat behandelte Vergleichsmuster zeigten Wasserdurchtritt nach 67 800 Knickungen. Die Prüfung auf Ölabweisung nach AATCC 118 [Bibliothek des Leders, Bd. 10, Seiten 148 ff. (1982)] ergab ohne Behandlung mit dem Polyorganosiloxan-Cokondensat die Stufe 0 (keine Ölabweisung), mit Behandlung die Stufe 2. Das oligomerisierte Polyorganosiloxan-Cokondensat eignet sich also zur gleichzeitigen Hydro- und Oleophobierung von Leder.

### Beispiel A17

### Behandlung von Leder mit dem oligomerisierten Polyorganosiloxan-Cokondensat aus Beispiel H2 in Kombination mit einem anderen Hydrophobiermittel, aber ohne Mineralsalzfixierung

Man arbeitete wie in Beispiel A16, jedoch ohne Fixierung mit 3 Gew.-% Chromosal B. Trotz der für die Hydrophobierung ungünstigen Bedingungen - das Hydrophobierungsmittel Eupilon WAS-1) wird erst durch die Fixierung aktiviert - erfolgte der Durchtritt von Wasser im Maeser-Test bei zwei Probestücken nach 20 500/39 800 Knickungen Bei zwei Probestücken ohne Behandlung mit dem erfindungsgemäßen Polyorganosiloxan-Cokondensat trat bereits nach 12 300/12 300 Knickungen Wasser durch.

### Beispiel A 18

### Behandlung von vegetabilisch gegerbtem Leder mit dem oligomerisierten Polyorganosiloxan-Cokondensat aus Beispiel H2

Handelsübliches Vegetabilleder (Hersteller Fa. Hamann GmbH, Mülheim) wurde 10 Minuten in die wäßrige, erfindungsgemäße Oligomerisierungsmischung des Beispiels H2 getaucht, die in einer Weise mit Wasser verdünnt war, daß die Konzentration an Polyorganosiloxan-Cokondensat einer berechneten Konzentration an Fluoralkylalkoxysilan von 2,0 Gew.-% entsprach. Nach dem Trocknen bei 80 °C wurde das Leder in einen Zylinder eingespannt und eine Wassersäule von ca. 10 cm Höhe aufgesetzt. Nach 4 Stunden war noch kein Wasserdurchtritt zu beobachten.

### Beispiel A19 (Vergleichsbeispiel)

### Behandlung von Baumwolle mit dem Produkt aus Beispiel H7

Baumwollstoff wurde in Quadrate mit einer Kantenlänge von 5 cm geschnitten, und die Quadrate wurden ca. 5 Minuten in die wäßrige Lösung des Polyorganosiloxan-Cokondensats gemäß Beispiel H7 getaucht, die zuvor in einer Weise mit Wasser verdünnt war, daß die Konzentration an Polyorganosiloxan-Cokondensat einer berechneten Konzentration an Fluoralkylalkoxysilan von 1,0 Gew.-% entsprach. Sofort nach Trocknung der Stoffstücke bei Raumtemperatur dringen auf die Oberfläche aufgebrachtes Wasser sowie Öl auch (Mineralöl, Thermoöl Marlotherm S oder Siliconöl) in den Stoff ein. Ein hydro- und oleophober Oberflächeneffekt wird erst nach Tagen Lagerdauer bei Raumtemperatur beobachtet. Der Effekt erreicht nicht das Ausmaß, das bei der Behandlung mit dem erfindungsgemäßen Polyorganosiloxan-Cokondensat gemäß Beispiel A6 erreicht wird.

### Beispiel A20 (Vergleichsbeispiel)

### Behandlung von Holz mit dem Produkt aus Beispiel H7

Eine ca. 0,5 cm starke Holzplatte wurde in Rechtecke mit den Kantenlängen 3 x 5 cm geschnitten, und die Rechtecke wurden ca. 5 Minuten in die wäßrige Lösung des Polyorganosiloxan-Cokondensats gemäß Beispiel H7 getaucht, die zuvor in einer Weise mit Wasser verdünnt war, daß die Konzentration an Polyorganosiloxan-Cokondensat einer berechneten Konzentration an Fluoralkylalkoxysilan von 1,0 Gew.-% entsprach. Sofort nach Trocknung der Holzstücke bei Raumtemperatur dringen auf die Oberfläche aufgebrachtes Wasser sowie auch Öl (Mineralöl, Thermoöl Marlotherm S oder Siliconöl) in das Holz ein. Ein hydrophober und oleophober Oberflächeneffekt wird erst nach Tagen Lagerdauer bei Raumtemperatur beobachtet. Der Effekt erreicht nicht das Ausmaß, das bei der Behandlung mit dem erfindungsgemäßen Polyorganosiloxan-Cokondensat gemäß Beispiel A7 erreicht wird.

### Beispiel A21 (Vergleichsbeispiel)

### Behandlung von Papier mit dem Produkt aus Beispiel H7

Papiertaschentücher wurden in quadratische Stücke mit der Kantenlänge von ca. 5 cm geschnitten, und die Stücke wurden ca. 5 Minuten in die wäßrige Lösung des Polyorganosiloxan-Cokondensats gemäß Beispiel H7 getaucht, die zuvor in einer Weise mit Wasser verdünnt war, daß die Konzentration an Polyorganosiloxan-Cokondensat einer berechneten Konzentration an Fluoralkylalkoxysilan von 1,0 Gew.-% entsprach. Sofort nach Trocknung der Papierstücke bei Raumtemperatur dringen auf die Oberfläche aufgebrachtes Wasser sowie auch Öl (Mineralöl, Thermoöl Marlotherm S oder Siliconöl) in das Papier ein. Ein hydrophober und oleophober Oberflächeneffekt wird erst nach Tagen Lagerdauer bei Raumtemperatur beobachtet. Der Effekt erreicht nicht das Ausmaß, das bei der Behandlung mit dem erfindungsgemäßen Polyorganosiloxan-Cokondensat gemäß Beispiel A8 erreicht wird.

### Beispiel A22 (Vergleichsbeispiel)

### Behandlung von Glas mit dem Produkt aus Beispiel H7

Glasscheiben mit einer Kantenlänge von 10 x 20 cm wurden ca. 5 Minuten in die wäßrige Lösung des Polyorganosiloxan-Cokondensats gemäß Beispiel H7 getaucht, die zuvor in einer Weise mit Wasser verdünnt war, daß die Konzentration an Polyorganosiloxan-Cokondensat einer berechneten Konzentration an Fluoralkylalkoxysilan von 1,0 Gew.-% entsprach. Sofort nach dem Abtropfen und Trocknen der Glasscheiben bei Raumtemperatur perlen auf die Oberfläche aufgebrachtes Wasser sowie Öl (Mineralöl, Thermoöl Marlotherm S oder auch Siliconöl) deutlich ab. Der Randwinkel beträgt bei den genannten Flüssigkeiten > 90°. Bei unbehandeltem Glas ist der Randwinkel deutlich als 90°. Das Produkt hinterläßt auf dem Glas einen Film und eignet sich zur gleichzeitigen Hydro- und Oleophobierung von Glas.

Nach 5stündigem Kochen der behandelten Glasscheiben in Wasser wird eine signifikante Abnahme des Randwinkels beim Auftragen von Wasser oder Öl festgestellt. Das Produkt ist daher, anders als das im Beispiel A 9 verwendete erfindungsgemäße Polyorganosiloxan-Cokondensat, nicht resisient gegen Feuchtigkeitsangriff.

### Beispiel A23 (Vergleichsbeispiel)

### Behandlung von Leder mit dem Produkt aus Beispiel H7

Unbehandeltes, Chrom-gegerbtes Leder wurde ca. 5 Minuten in die wäßrige Lösung des Polyorganosiloxan-Cokondensats gemäß Beispiel H7 getaucht, die zuvor in einer Weise mit Wasser verdünnt worden war, daß die Konzentration an Polyorganosiloxan-Cokondensat einer berechneten Konzentration an Fluoralkylalkoxysilan von 1,0 Gew.-% entsprach. Sofort nach dem Trocknen des Leders bei Raumtemperatur dringen auf die Oberfläche aufgebrachtes Wasser sowie auch Öl (Mineralöl, Thermoöl Marlotherm S oder Siliconöl) in das Leder ein. Ein hydrophober und oleophober Oberflächeneffekt wird auch nach Tagen Lagerdauer bei Raumtemperatur nicht beobachtet.

### Beispiel A24

### Behandlung von Leder mit den Produkten aus den Beispielen H4, H5, H6

Unbehandeltes, Chrom-gegerbtes Leder wurde ca. 5 Minuten in wäßrige Lösungen der Polyorganosiloxan-Cokondensate gemäß den Beispielen H4, H5 bzw. H6 getaucht, die jeweils in einer Weise mit Wasser verdünnt worden waren, daß die Konzentrationen an Polyorganosiloxan-Cokondensat einer berechneten Konzentration an eingesetzten Silanen von 1,0 Gew.-% entsprach. Nach 7 Tagen Trocknung der Lederstücke bei Raumtemperatur dringt auf die Oberfläche aufgebrachtes Wasser nicht mehr in das Leder ein. Man beobachtet einen deutlichen Abperleffekt. Die Produkte eignen sich also zur Hydrophobierung von Leder.

### Beispiel A25 (Vergleichsbeispiel)

### Behandlung von Leder mit dem Produkt aus Beispiel H7

Unbehandeltes, Chrom-gegerbtes Leder wurde ca. 5 Minuten in die wäßrige Lösung des Polyorganosiloxan-Cokondensats gemäß Beispiel H7 getaucht, die zuvor in einer Weise mit Wasser verdünnt worden war, daß die Konzentration an Polyorganosiloxan-Cokondensat einer berechneten Konzentration an Fluoralkylalkoxysilan von 1,0 Gew.-% entsprach. Nach 7 Tagen Trocknung der Lederstücke bei Raumtemperatur dringt auf die Oberfläche aufgebrachtes Wasser in das Leder ein. Ein hydrophober Oberflächeneffekt wird erst nach Tempern des Leders bei 150°C erreicht. Aufgrund der hohen Temperatur tritt jedoch ein Qualitätsverlust ein, der sich z. B. in Narbenbrüchen äußert. Das Abperlverhalten ist auch nach dem Tempern deutlich schlechter als bei dem erfindungsgemäßen Beispiel A24.

### Beispiel A26

### Behandlung von Baumwolle mit den Produkten der Beispiele H4, H5, H6

Baumwollstoff wurde in Quadrate mit einer Kantenlänge von 5 cm geschnitten, und die Quadrate wurden ca. 5 Minuten in wäßrige Lösungen der Polyorganosiloxan-Cokondensat gemäß den Beispielen H4, H5 bzw. H6 getaucht, die zuvor jeweils in einer Weise mit Wasser verdünnt worden war, daß der Gehalt an Polyorganosiloxan-Cokondensat einer berechneten Konzentration an eingesetzten Silanen von 1 Gew.-% entsprach. Zwei Tage nach Trocknung der Stoffstücke bei Raumtemperatur dringt auf die Oberfläche der Stoffstücke aufgebrachtes Wasser nicht mehr in den Stoff ein. Man beobachtet einen deutlichen Abperleffekt. Bei unbehandeltem Stoff wird das Wasser sofort aufgesogen. Das Produkt eignet sich somit zur Hydrophobierung von Baumwolle.

### Beispiel A27 (Vergleichsbeispiel)

### Behandlung von Baumwolle mit dem Produkt des Beispiels H8

Baumwollstoff wurde in Quadrate mit einer Kantenlänge von 5 cm geschnitten, und die Quadrate wurden ca. 5 Minuten in eine wäßrige Lösung des Polyorganosiloxan-Cokondensats gemäß Beispiel H8 getaucht, die zuvor in einer Weise mit Wasser verdünnt worden war, daß der Gehalt an Polyorganosiloxan-Cokondensat einem berechneten Gehalt an eingesetzten Silanen von 5 Gew.-% entsprach. Zwei Tage nach Trocknung der Stoffstücke bei Raumtemperatur dringt auf die Oberfläche der Stoffstücke aufgebrachtes Wasser in den Stoff ein. Ein hydrophober Oberflächeneffekt wird erst nach Tempern des imprägnierten Stoffs bei 150 °C erreicht. Hierbei verfärbt sich der (ursprünglich weiße) Stoff leicht gelb. Das Abperlverhalten ist auch nach dem Tempern deutlich schlechter als beim Beispiel A26. Das Produkt eignet sich also nicht zur Hydrophobierung von Baumwolle.

## Patentansprüche

1. Oligomerisiertes Polyorganosiloxan-Cokondensat, erhältlich durch
(a) Mischen
- mindestens eines wasserlöslichen Amino-funktionellen Organosilans der allgemeinen Formel I
H₂N(CH₂)_{f}(NH)_{g}(CH₂)ₕ-Si(CH₃)_{z}(OR)_{3-z} (I),
worin f gleich 0 oder eine ganze Zahl von 1 bis 6 ist, g gleich 0 falls f gleich 0 und g gleich 1 falls f ungleich 0 ist; h eine ganze Zahl von 1 bis 6 bedeutet, z für 0, 1 oder 2 steht und R eine lineare, verzweigte oder cyclische Alkyl-Gruppe mit 1 bis 8 C-Atomen oder eine Aryl-Gruppe bezeichnet, mit
- mindestens einem Fluor-funktionellen Organosilan der allgemeinen Formel II
R¹-Yₘ-(CH₂)₂Si(R²)_{y}(OR)_{3-y} (II),
worin R¹ eine mono-, oligo- oder perfluorierte Alkyl-Gruppe mit 1 bis 9 C-Atomen oder eine mono-, oligo- oder perfluorierte Aryl-Gruppe bedeutet, Y eine CH₂-, O- oder S-Gruppe bezeichnet, R² für eine lineare, verzweigte oder cyclische Alkyl-Gruppe mit 1 bis 8 C-Atomen oder eine Aryl-Gruppe steht, R eine lineare, verzweigte oder cyclische Alkyl-Gruppe mit 1 bis 8 C-Atomen oder eine Aryl-Gruppe darstellt, y für 0 oder 1 und m für 0 oder 1 stehen, und/oder mit
- mindestens einem Organosilan der allgemeinen Formel III
R³-Si(CH₃)(OR)₂ (III),
und/oder mit
- mindestens einem Organosilan der allgemeinen Formel IV
R³-Si(OR)₃ (IV),
wobei R³ in den Formeln III und IV jeweils unabhängig eine lineare, verzweigte oder cyclische Alkyl-Gruppe mit 1 bis 8 C-Atomen bedeutet und R jeweils unabhängig eine lineare, verzweigte oder cyclische Alkyl-Gruppe mit 1 bis 8 C-Atomen oder eine Aryl-Gruppe bezeichnet,
in einem molaren Verhältnis M = [a/(b+c+d)] ≥ 0,1,
wobei a die Summe der Molzahlen der Organosilane gemäß Formel I, gegebenenfalls b die Summe der Molzahlen der Organosilane gemäß Formel II, gegebenenfalls c die Summe der Molzahlen der Organosilane gemäß Formel III sowie d gegebenenfalls die Summe der Molzahlen der Organosilane gemäß Formel IV sind;
(b) Versetzen des Gemisches mit Wasser und mit einer Säure sowie gegebenenfalls einem Alkohol; und
(c) Oligomerisierung des so erhaltenen Cokondensats unter Vergrößerung der Teilchengröße,
wobei die mittlere Teilchengröße d50 der oligomerisierten Polyorganosiloxan-Cokondensat-Teilchen 0,03 bis 1 µm beträgt.

2. Cokondensat nach Anspruch 1,
**dadurch gekennzeichnet,**
**daß** es in wäßriger oder wäßrig-alkoholischer Lösung vorliegt, deren pH 1 bis 8 beträgt.

3. Cokondensat nach Anspruch 1,
**dadurch gekennzeichnet,**
**daß** es in wäßriger oder wäßrig-alkoholischer Lösung vorliegt, deren pH 3 bis 6 beträgt.

4. Cokondensat nach Anspruch 1,
**dadurch gekennzeichnet,**
**daß** es in wäßriger oder wäßrig-alkoholischer Lösung vorliegt, deren pH 3 bis 5 beträgt.

5. Cokondensat nach einem der Ansprüche 2 bis 4,
**dadurch gekennzeichnet,**
**daß** sein Gehalt in der Lösung 0,005 bis 85 Gew.-% beträgt.

6. Cokondensat nach einem der Ansprüche 1 bis 5,
**dadurch gekennzeichnet,**
**daß** Trübung verursachende Teilchen abgetrennt wurden.

7. Cokondensat nach einem der Ansprüche 1 bis 6,
**dadurch gekennzeichnet,**
**daß** die in der Stufe (b) verwendete Säure eine einbasische anorganische oder organische Säure ist.

8. Verfahren zur Herstellung eines oligomerisierten Organopolysiloxan-Cokondensats,
**dadurch gekennzeichnet,**
**daß** man
(a) die Komponente I gemäß Anspruch 1 mit den Komponenten II und/oder III und/oder IV gemäß Anspruch 1 in dem molaren Verhältnis M gemäß Anspruch 1 mischt;
(b) das Gemisch mit Wasser und mit einer Säure sowie gegebenenfalls einem Alkohol versetzt; und
(c) das so erhaltenen Cokondensat unter Vergrößerung der Teilchengröße oligomerisiert.

9. Verwendung der oligomerisierten Organopolysiloxan-Cokondensate nach den Ansprüchen 1 bis 7 (i) zur hydrophoben und gegebenenfalls zusätzlich oleophoben Beschichtung von Oberflächen, (ii) als Trennmittel oder (iii) zur schmutzabweisenden Ausrüstung von Oberflächen.

## Claims

1. An oligomerized polyorganosiloxane cocondensate obtainable by
(a) mixing
- at least one water-soluble amino-functional organosilane of the general formula I
H₂N(CH₂)_{f}(NH)_{g}(CH₂)ₕ-Si(CH₃)_{z}(OR)_{3-z} (I),
where f is equal to 0 or a whole number from 1 to 6, g is equal to 0 if f is equal to 0 and g is equal to 1 if f is not equal to 0; h is a whole number from 1 to 6, z stands for 0, 1 or 2, and R is a linear, branched or cyclic alkyl group with 1 to 8 C atoms or an aryl group, with
- at least one fluoro-functional organosilane of the general formula II
R¹-Yₘ-(CH₂)₂Si(R²)_{y}(OR)_{3-y} (II),
where R¹ is a monofluorinated, oligofluorinated or perfluorinated alkyl group with 1 to 9 C atoms or a monofluorinated, oligofluorinated or perfluorinated aryl group, Y is a CH₂, O or S group, R₂ stands for a linear, branched or cyclic alkyl group with 1 to 8 C atoms or an aryl group, R is a linear, branched or cyclic alkyl group with 1 to 8 C atoms or an aryl group, y stands for 0 or 1 and m stands for 0 or 1, and/or with
- at least one organosilane of the general formula III
R³-Si(CH₃) (OR)₂ (III),
and/or with
- at least one organosilane of the general formula IV
R³-Si(OR)₃ (IV),
where R³ in formulae III and IV, independently in each instance, is a linear, branched or cyclic alkyl group with 1 to 8 C atoms and R, independently in each instance, is a linear, branched or cyclic alkyl group with 1 to 8 C atoms or an aryl group,
in a molar ratio M = [a/(b+c+d)] ≥ 0.1,
where a is the sum of the mole numbers of the organosilanes according to formula I, b, if applicable, is the sum of the mole numbers of the organosilanes according to formula II, c, if applicable, is the sum of the mole numbers of the organosilanes according to formula III, and d, if applicable, is the sum of the mole numbers of the organosilanes according to formula IV;
(b) adding water and an acid and also, if desired, an alcohol to the mixture; and
(c) oligomerizing the resulting cocondensate, with an accompanying increase in particle size,
the mean particle size, d50, of the oligomerized polyorganosiloxane cocondensate particles being from 0.03 to 1 µm.

2. A cocondensate according to claim 1, **characterized in that** it is in aqueous or aqueous-alcoholic solution whose pH is from 1 to 8.

3. A cocondensate according to claim 1, **characterized in that** it is in aqueous or aqueous-alcoholic solution whose pH is from 3 to 6.

4. A cocondensate according to claim 1, **characterized in that** it is in aqueous or aqueous-alcoholic solution whose pH is from 3 to 5.

5. A cocondensate according to any one of claims 2 to 4, **characterized in that** its proportion in the solution is from 0.005 to 85% by weight.

6. A cocondensate according to any one of claims 1 to 5, **characterized in that** particles which cause cloudiness have been separated off.

7. A cocondensate according to any one of claims 1 to 6, **characterized in that** the acid used in stage (b) is a monobasic organic or inorganic acid.

8. A method of preparing an oligomerized organopolysiloxane cocondensate,
**characterized in that**
(a) component I according to claim 1 is mixed with components II and/or III and/or IV according to claim 1 in the molar ratio M according to claim 1;
(b) water and an acid and also, if desired, an alcohol are added to the mixture; and
(c) the resulting cocondensate is oligomerized, accompanied by an increase in particle size.

9. The use of the oligomerized organopolysiloxane cocondensates according to any of claims 1 to 7 (i) for the hydrophobic and additionally, if desired, oleophobic coating of surfaces, (ii) as release agents or (iii) for providing a dirt-repelling finish on surfaces.

## Revendications

1. Produit de co-condensation de polyorganosiloxane oligomérisé, que l'on peut obtenir par
(a) mélange de :
- au moins un organosilane amino-fonctionnel soluble dans l'eau, de formule générale I
H₂N(CH₂)_{f}(NH)_{g}(CH₂)ₕ-Si(CH₃)_{z}(OR)_{3-z} (I),
dans laquelle f est égal à 0 ou à un nombre entier allant de 1 à 6, g est égal à 0 si f est égal à 0 et g est égal à 1 si f est différent de 0 ; h est un nombre entier allant de 1 à 6, z vaut 0, 1 ou 2 et R représente un groupe alkyle linéaire, ramifié ou cyclique comportant de 1 à 8 atomes de carbone ou désigne un groupe aryle,
- au moins un organosilane fluoro-fonctionnel de formule générale II
R¹-Yₘ-(CH₂)₂Si(R²)_{y}(OR)_{3-y} (II),
dans laquelle R¹ représente un groupe alkyle mono-, oligo- ou perfluoré comportant de 1 à 9 atomes de carbone ou un groupe aryle mono-, oligo- ou perfluoré, Y représente un groupe CH₂, O ou S, R² représente un groupe alkyle linéaire, ramifié ou cyclique comportant de 1 à 8 atomes de carbone ou un groupe aryle, R représente un groupe alkyle linéaire, ramifié ou cyclique comportant de 1 à 8 atomes de carbone ou un groupe aryle, y vaut 0 ou 1 et m vaut 0 ou 1, et/ou avec
- au moins un organosilane de formule générale III
R³-Si(CH₃)(OR)₂ (III)
et/ou avec
- au moins un organosilane de formule générale IV
R³-Si(OR)₃ (IV),
dans laquelle R³ dans les formules III et IV représente à chaque fois indépendamment un groupe alkyle comportant de 1 à 8 atomes de carbone et R représente à chaque fois indépendamment un groupe alkyle linéaire, ramifié ou cyclique comportant de 1 à 8 atomes de carbone ou un groupe aryle,
dans un rapport molaire M = [a/(b+c+d)] ≥ 0,1,
où a représente la somme des nombres molaires des organosilanes selon la formule I, le cas échéant b la somme des nombres molaires des organosilanes selon la formule II, le cas échéant c la somme des nombres molaires des organosilanes selon la formule III, et d le cas échéant la somme des nombres molaires des organosilanes selon la formule IV ;
(b) mélange du mélange avec de l'eau et avec un acide ainsi que le cas échéant avec un alcool ; et
(c) oligomérisation du produit de co-condensation ainsi obtenu avec augmentation des tailles particulaires,
la taille particulaire moyenne d50 des particules de produit de co-condensation de polyorganosiloxane oligomérisées allant de 0,03 à 1 µm.

2. Produit de co-condensation selon la revendication 1,
**caractérisé en ce qu'**
il se présente dans une solution aqueuse ou alcoolique-aqueuse dont le pH va de 1 à 8.

3. Produit de co-condensation selon la revendication 1,
**caractérisé en ce qu'**
il se présente dans une solution aqueuse ou alcoolique-aqueuse dont le pH va de 3 à 6.

4. Produit de co-condensation selon la revendication 1,
**caractérisé en ce qu'**
il se présente dans une solution aqueuse ou alcoolique-aqueuse dont le pH va de 3 à 5.

5. Produit de co-condensation selon l'une des revendications 2 à 4,
**caractérisé en ce que**
sa teneur dans la solution va de 0,005 à 85% en poids.

6. Produit de co-condensation selon l'une des revendications 1 à 5,
**caractérisé en ce qu'**
on sépare les particules provoquant un trouble.

7. Produit de co-condensation selon l'une des revendications 1 à 6,
**caractérisé en ce que**
l'acide utilisé dans l'étape (b) est un acide inorganique ou organique monobasique.

8. Procédé de fabrication d'un produit de co-condensation d'organopolysiloxane oligomérisé,
**caractérisé en ce que**
(a) on mélange le composant (I) selon la revendication 1 avec le composant II et/ou III et/ou IV selon la revendication 1 dans le rapport molaire M selon la revendication 1 ;
(b) on dilue le mélange avec de l'eau et avec un acide ainsi que le cas échéant un alcool ; et
(c) on oligomérise le produit de co-condensation ainsi obtenu avec augmentation des tailles particulaires.

9. Utilisation des produits de co-condensation d'organopolysiloxane oligomérisés selon les revendications 1 à 7 (i) en vue d'un revêtement hydrophobe et le cas échéant en outre oléophobe de surfaces, (ii) comme agent de séparation ou (iii) pour conférer aux surfaces un caractère repoussant les salissures.
